# EUROPEAN PATENT SPECIFICATION

(11) **EP 2 974 910 B1**
(45) Date of publication and mention of the grant of the patent: **02.05.2018**
(21) Application number: 15177279.5
(22) Date of filing: 17.07.2015
(51) Int. Cl.: B60R 9/04, B60R 9/08, B60R 9/10

(54) **BICYCLE CARRIER**
FAHRRADTRÄGER
PORTE BICYCLETTE

(30) Priority: 17.07.2014 GB 201412744
(43) Date of publication of application: 20.01.2016
(73) Proprietor: Jaguar Land Rover Limited, Warwickshire CV3 4LF (GB)
(72) Inventor: Truman, Mark, Coventry, Warwickshire CV3 4LF (GB); Darlington, Dale, Coventry, Warwickshire CV3 4LF (GB); Adams-White, David, Coventry, Warwickshire CV3 4LF (GB); Matthews, Paul, Coventry, Warwickshire CV3 4LF (GB); Smith, Luke, Coventry, Warwickshire CV3 4LF (GB)
(74) Representative: Holmes, Matthew William

(56) References cited:
- EP-A1- 0 143 065
- EP-A1- 1 378 398
- DE-A1-102013 006 929
- GB-A- 648 982
- GB-A- 1 354 332
- US-A- 4 437 597
- US-A- 6 092 706
- US-A1- 2007 119 888
- US-A1- 2008 047 994
- US-A1- 2011 139 842

## Description

### TECHNICAL FIELD

The present disclosure relates to a frame clamp and particularly, but not exclusively, to a frame clamp for a bicycle. Aspects of the invention relate to a frame clamp, to a bicycle carrier and to a vehicle.

### BACKGROUND

Bicycle carriers are often placed on vehicles for transporting bicycles. Not all drivers wish to transport bicycles and, as such, bicycle carriers are commonly provided as separate, add-on components that can be secured to or mounted on the vehicle. Some vehicle manufacturers provide bicycle carriers shaped to fit their own vehicles but the likelihood of use by the average vehicle consumer is such that the bicycle carriers generally remain add-on components. Recent trends to increase aerodynamic efficiency have dictated that vehicles are shaped to reduce drag. Add-on bicycle carriers, however, remain aerodynamically inefficient.

GB1354332 describes a pipe section holding means comprising adjustable clamping means.

It is against this background that the present invention is conceived.

### SUMMARY OF THE INVENTION

Aspects of the invention relate to a frame clamp, a bicycle carrier and a vehicle as defined in the appended claims.

According to one aspect of the invention there is provided a frame clamp comprising:
two opposing jaws defining a clamp distance therebetween, the opposing jaws being pivotably connected at a pivot point and comprising resilient inserts arranged to clamp an object; and
an over-centre latch comprising a handle portion and a slave portion,
characterised in that the handle and slave portion are each pivotably connected to the other and each pivotably connected to one of the opposing jaws, wherein the resilient inserts provide tension to the over-centre latch,
wherein the pivotable connection between the handle portion or slave portion and corresponding opposing jaw is an adjustable connection, and wherein adjustment of said adjustable connection adjusts the clamp distance.

In an embodiment, the resilient inserts are replaceable.

In an embodiment, the adjustable connection comprises:
a pivot bolt extending from said corresponding opposing jaw; and
two or more apertures in the handle portion or slave portion, each being configured to receive the pivot bolt,
wherein movement of the pivot bolt from one aperture to another provides said adjustment.

In an embodiment the opposing jaws and the over-centre latch are made from aluminium. The resilient inserts may be made from rubber.

In an embodiment the frame clamp comprises a locating rod for locating the frame clamp in a bicycle carrier, the locating rod being connected to one of the opposing jaws.

In an aspect of the invention there is provided a bicycle carrier comprising a frame clamp.

In an aspect of the invention there is provided a vehicle comprising a frame clamp or a bicycle carrier.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a perspective view of a vehicle with a bicycle carrier according to an embodiment of the invention;
Figure 2 shows a bicycle carrier according to an embodiment of the invention;
Figure 3 shows a panel of a bicycle carrier according to an embodiment of the invention;
Figure 4 shows an axle support of a bicycle carrier according to an embodiment of the invention;
Figure 5 shows a frame of a bicycle carrier according to an embodiment of the invention;
Figure 6 shows a frame clamp of a bicycle carrier according to an embodiment of the invention; and
Figure 7 shows channel covers of a bicycle carrier according to an embodiment of the invention;

### DETAILED DESCRIPTION

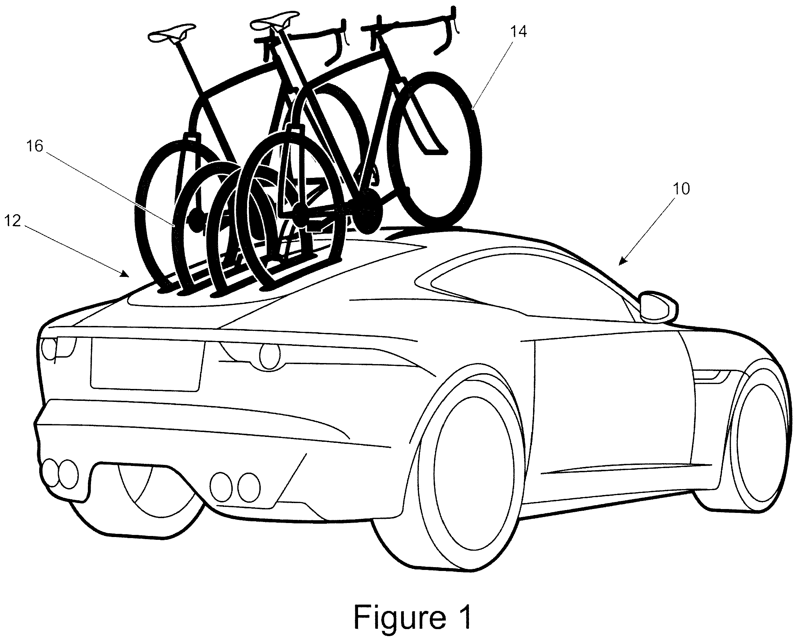

Figure 1 shows a vehicle 10 comprising an apparatus in the form of a bicycle carrier 12 according to an embodiment of the invention. In the example shown, the bicycle carrier 12 is configured to support or carry two bicycles 14 and two spare wheels 16. Other configurations may be used to carry more or fewer bicycles and spare wheels. The bicycle carrier 12 may also be used with alternative vehicle types to the sports car shown in Figure 1, which is for illustrative purposes only.

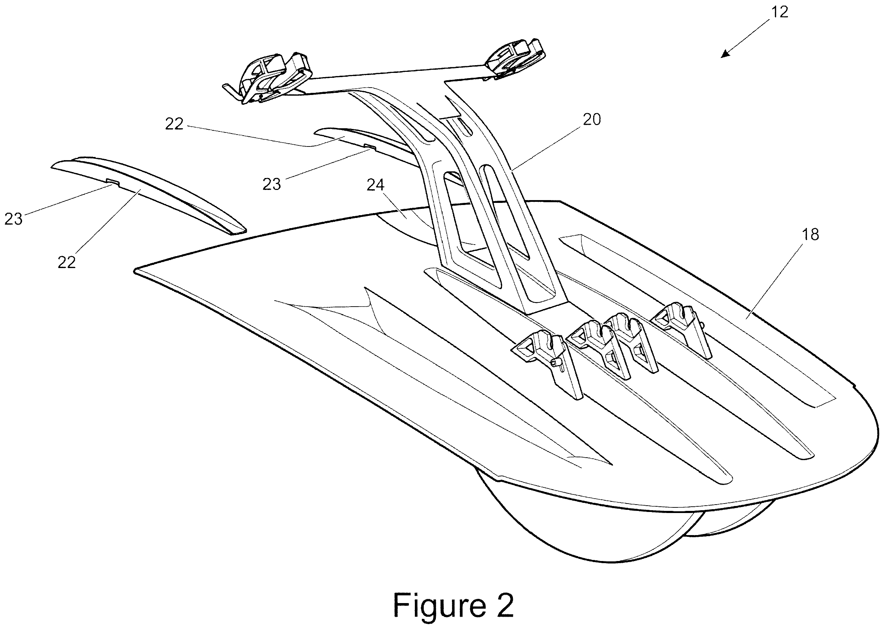

Figure 2 shows the bicycle carrier 12 in isolation. The bicycle carrier 12 comprises a panel 18, a frame 20 and wheel guides 22 used to guide the front wheels of the attached bicycles 14 (see Figure 1). An aerial 24 is positioned on the panel 18 but does not form part of the bicycle carrier. In an embodiment of the invention the aerial 24 is provided on a conventional centre high mounted stop light (CHIMSL) panel.

In the example shown, the components of the bicycle carrier comprise individual components joined together as an assembly. However, the skilled reader will appreciate that one or more of the components may be integrally formed. For example, the panel 18 and the frame 20 may be integrally moulded. In the example shown, the wheel guides 22 take the form of elongate channels or slots which are provided as separate components positioned on the roof of the vehicle 10. In an embodiment, the wheel guides are manufactured using carbon fibre, which is chosen for its low weight and high strength. Other materials may be used. In an embodiment, the wheel guides 22 are fixed to the roof using, for example, bolts and/or an adhesive. Alternatively, suction pads may be used to affix the wheel guides so that they can be removed when the bike carrier is not in use. The frame may also be removably attached to the panel, using for example, click fastenings, bolts, and the like. In use, and where the frame is removed from the panel 18, a vanity panel is provided to cover a rebate in which the frame is located.

In an example embodiment, fixing means is provided about an aperture 23 in the wheel guide. The fixing means may take the form of a hook and loop fastener material, such as Velcro ®, or a clamp arm. The fixing means is provided, in such embodiments, for fixing a wheel of the bicycle to the wheel guide 22.

In an example embodiment, the wheel guides 22 are attached to the panel 18. The attachment may be a rigid fixation of the wheel guides 22 to the panel 18 or may be a flexible fixation to allow for movement between the components. For example, a pantograph system is used in an embodiment where the boot of the host vehicle is openable and the attachment of the wheel guides 22 to the panel 18 must move during opening of the boot.

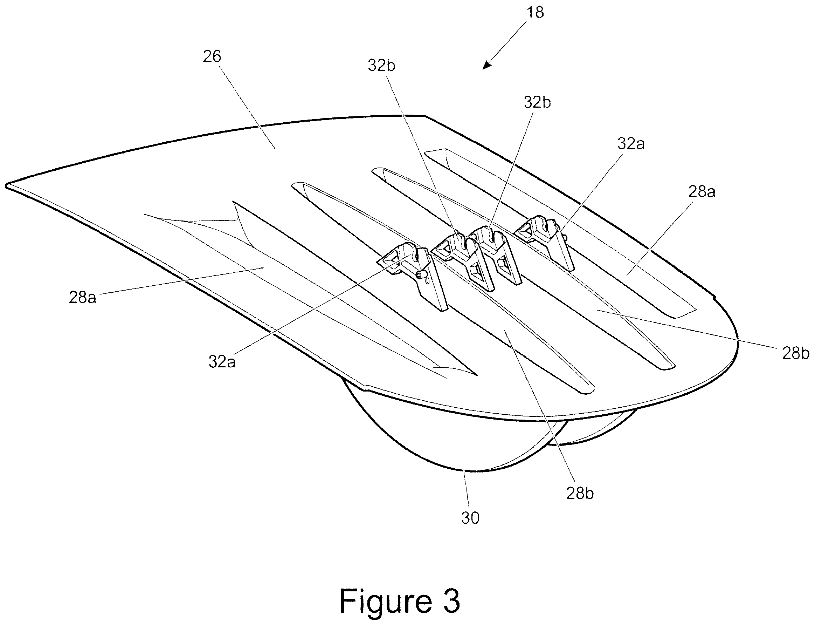

Figure 3 shows the panel 18 in isolation. The panel comprises an exterior surface 26 from which a series of recesses in the form of channels 28 (a and b) depend. Of the channels 28, two bicycle channels 28a are each arranged to receive at least a portion of a wheel of a respective bicycle 14 (see Figure 1) and two spare wheel channels 28b are each arranged to receive at least a portion of a respective spare wheel 16 (see Figure 1). In the example shown, the spare wheel channels 28b are deeper than the bicycle channels 28a. This means that the spare wheels are positioned lower than the bicycles, which serves three purposes. Firstly, this prevents the spare wheels from being an obstacle when loading and unloading the bicycles; secondly, it reduces the aerodynamic resistance caused by the spare wheels. Thirdly, it is advantageous because the crank set of the bicycle, in the bicycle channel, does not clash with the roof of the host vehicle.

In an example embodiment the dimensions and profile of the spare wheel channels are selected to accommodate a gear set attached to, for example, a bicycle rear wheel. In an example embodiment the channels are shaped to have a lead-in profile on one or both sides to assist with placement of a bicycle wheel in the channel. The lead-in profile comprises a chamfered junction of the channel 28 and the panel 18.

The panel 18 could be formed using carbon fibre, which is chosen for its low weight and high strength. Alternative materials may be used. In the example shown, the panel 18 is shaped to replace the rear windscreen of the host vehicle. Standard windscreen adhesive, such as for example Sikaflex ® and its corresponding bonding agent system's primer and activator, is used to fix the panel 18 to the host vehicle 10. In some embodiments, the panel 18 is fixed to the host vehicle 10 using fastenings such as bolts, instead of or in addition to an adhesive and/or bonding agent system. In some embodiments, the host vehicle 10 has a quick release rear windscreen for fixing and removing the window to and from the vehicle. In those embodiments, the panel is also fixable and removable to and from the tailgate using the quick release system.

An aperture 30 is provided at a lower or lowermost part of each channel 28 to permit water drainage in use. Pipework (not shown) may be attached to the apertures 30 to channel water out of the vehicle 10 (see Figure 1). In an example embodiment, the pipework from each channel aperture 30 is connected together and a single outlet is provided out of the rear wheel arch of the vehicle 10.

In an example embodiment (not shown) a window is provided in the panel 18 to facilitate the driver's view to the rear of the vehicle. In one embodiment, the wheel channels 28b are be replaced by the window. The window extends between the bicycle channels 28a and is positioned in a rebate in the panel 18. In an embodiment, the bicycle channels are removable components and may be removed from the exterior panel and replaced with a vanity panel, such that the boot compartment space can be increased when the bicycle carrier is not required. In this embodiment, the vanity panel and the bicycle channels are fixed to the exterior panel using click connections or the like.

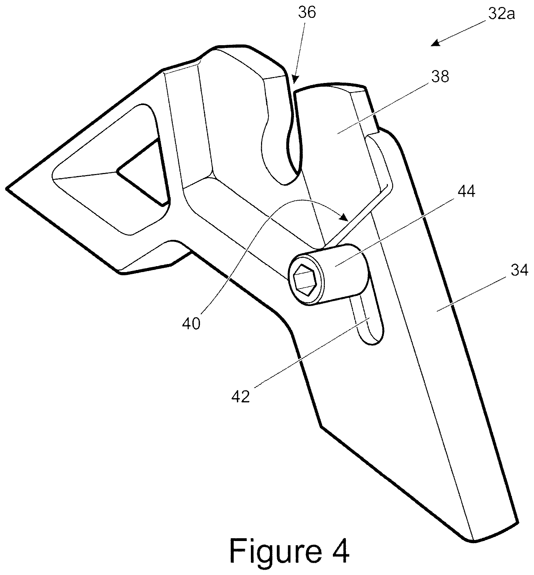

Axle supports 32 are provided adjacent to the wheel channels 28b. In the example embodiment shown, the axle supports 32 (a and b) are configured to be variable axle supports 32a or fixed axle supports 32b. In other embodiments all of the axle supports 32 are either fixed, variable or any combination thereof. Figure 4 shows a variable axle support 32a, which comprises a body 34 having a gate 36 with a variable opening varied by a movable gatepost 38. The movable gatepost 38 is movable in a channel 40 which extends into the body 34. A slot 42 in the body and a thumbscrew 44 allows movement and fixing of the gatepost 38. In an embodiment of the invention the gatepost 38 is spring biased and the thumbscrew 44 provides a handle to move the gatepost 38 for placing a removing an axle in the gate. In Figure 4, the movable gatepost is shown in an extended configuration whereby an axle of the spare wheel 16 (see Figure 1) is prevented from moving vertically out of the gate 36.

In an example embodiment, the axle supports 32 are manufactured from aluminium and connected to the panel 18 using adhesive, screws or the like. Other materials may be used. In example embodiments, the axle supports 32 are integrally moulded to the panel 18 and manufactured using the same material as that used for the panel 18.

In one embodiment, spare wheels 16 (see figure 1) are attached to the axle supports 32 using the quick release skewer as provided on many bicycle wheels. In other embodiments, the gatepost 38 is used to retain the spare wheel in the gate. As such, the distance between a pair of axle supports 32, either side of a channel 28 is substantially equal to the distance between blades of the bicycle fork. In some embodiments, the distance between the pair of axle supports 32 is slightly greater than that between the blades of the bicycle fork so that limited adjustment of the quick release skewer is required to replace a wheel of the bicycle.

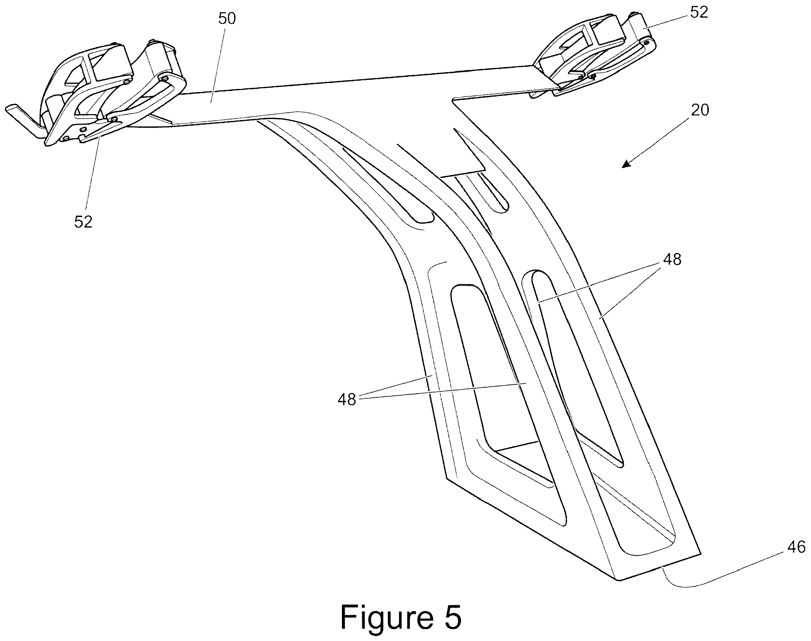

Figure 5 shows the frame 20 in isolation. The frame comprises a base 46 configured to mate with the top surface 26 of the panel 18 (see Figure 3). The frame further comprises arms 48 and a crossbar 50. The arms 48 are shaped so as to locate the crossbar appropriately, but further to limit the aerodynamic resistance. In some embodiments, the crossbar 50 is shaped to provide downforce to the vehicle, similarly to downforce provided by a spoiler. This is particularly advantageous for vehicles where there is no spoiler or it has been removed to accommodate the bicycle carrier 12.

The crossbar 50 has two frame clamps 52. In the example shown, the frame clamps are angled so as to connect to the down tube of the bicycles. Furthermore the orientation of the clamps is selected to reduce aerodynamic resistance caused by the clamps. In an embodiment, the clamps are removable so that when driving without the bicycles attached, the aerodynamic resistance is reduced.

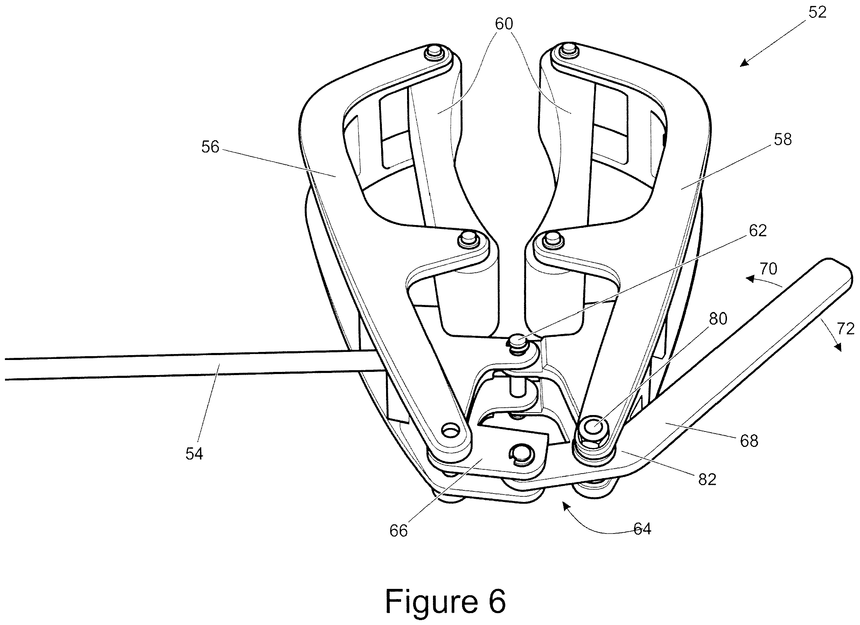

Figure 6 shows one of the frame clamps 52 in isolation. A rod 54 is used to locate the frame clamp in the crossbar 50 as shown in Figure 5. The frame clamp 52 comprises opposing jaws 56, 58, each having a rubber support, or resilient insert, 60 for contacting the down tube of the bicycle. The rubber support provides enhanced grip of the down tube without scratching it. The jaws 56, 58 are pivoted about a pivot point 62 and are movable using a lever mechanism 64 comprising two parts, a slave portion 66 and a handle portion 68. The lever mechanism 64 is an over-centre mechanism. When an operator moves the lever in the direction of the arrow 70, the jaws close toward each other. Tension in the rubber supports 60 acts as a spring on the over-centre mechanism and holds the jaws shut. Movement in the opposite direction, 72 leads to the jaws opening so that the bicycle may be removed. In an example, the frame clamps are made from aluminium. In other embodiments, other materials may be used. The slave portion 66 and the handle portion 68 are pivotably connected to each other and to corresponding opposing jaws. A pivot bolt 80 extends from the opposing jaw through one of two or more apertures 82 in the handle portion. In an alternative embodiment the two or more apertures 82 are provided in the slave portion. Adjustment of the pivot bolt 82 between select apertures 82 adjusts the distance between the resilient inserts of the opposing jaws to tailor the clamp to clamp objects of specific size. This is advantageous with bicycles because the down tube varies from one type of bicycle to another. For example, a time trial bicycle generally has a thinner down tube than a mountain bicycle.

Returning to Figure 1, the bicycle carrier is shown in use with two bicycles attached. In an example embodiment, the bicycles are fixed using the frame clamps 52 while the front wheel is free to move within the confines of the wheel guide 22. In example embodiments, this enables the tailgate of the vehicle to be opened while the bicycles are attached to it.

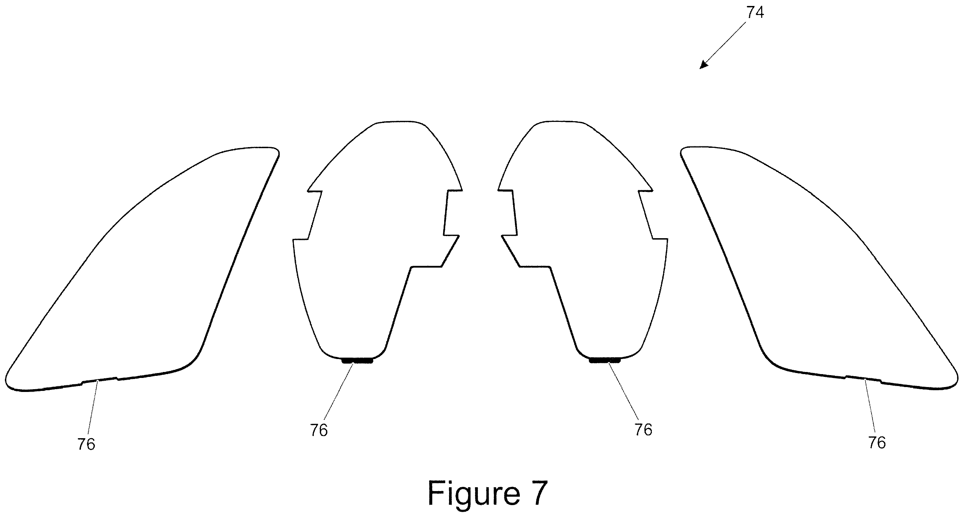

Figure 7 shows channel covers 74 as used in an example embodiment to cover the channels 28 (see Figure 3) when there are no bikes present to prevent ingress of water. The channel covers are made from a lightweight material, for example carbon fibre, and are retained in place about the channels using snap fit fittings 76. In an example embodiment, the channel covers are disposed over the channel. In an alternative embodiment, the channel covers are disposed slightly inside the top portion of the channel.

It will be understood that various modifications can be made to the invention without departing from the scope thereof. For example, the number of channels 28 can be selected subject to available space on the exterior panel, and any combination of wheel channels and bicycle channels can be provided as required. The provision of wheel guides 22 is advantageous but non-essential since adequate support for the bicycle or wheel may be provided by the channels 28 and/or frame 20 alone.

Where provided, the wheel guides 22 may be disposed on the same or a different exterior panel to that on which the channels 28 are disposed. For example, in the case of an SUV- or estate-type vehicle having a relatively long, planar roof, both the channels 28 and the wheel guides 22 may be disposed in the roof panel. Alternatively, in the case of a hatchback vehicle or sports car, such as that illustrated, the channels 28 may be disposed in a panel forming part of a tailgate or rear windscreen of the vehicle, whereas the wheel guides 22 may be disposed on a roof panel of the vehicle.

The channels and/or wheel guides may be integrally formed with the exterior panel in which they are disposed, or may be separately formed and attached thereto, or a combination of both.

## Claims

1. A frame clamp (52) for a bicycle carrier, the frame clamp comprising:
two opposing jaws (56, 58) defining a clamp distance therebetween, the opposing jaws being pivotably connected at a pivot point (62) and comprising resilient inserts (60) arranged to clamp an object; and
an over-centre latch (64) comprising a handle portion (68) and a slave portion (66),
**characterised in that** the handle and slave portion are each pivotably connected to the other and each pivotably connected to one of the opposing jaws, wherein the resilient inserts provide tension to the over-centre latch,
wherein the pivotable connection (80) between the handle portion or slave portion and the corresponding opposing jaw (56, 58) is an adjustable connection, and wherein adjustment of said adjustable connection adjusts the clamp distance.

2. A frame clamp (52) for a bicycle carrier, the frame clamp and as claimed in claim 1, wherein the resilient inserts (60) are replaceable.

3. A frame clamp (52) for a bicycle carrier, the frame clamp and as claimed in claim 1 or 2, wherein the adjustable connection (80) comprises:
a pivot bolt (80) extending from said corresponding opposing jaw; and
two or more apertures (82) in the handle portion (58) or slave portion (56), each being configured to receive the pivot bolt (80);
wherein movement of the pivot bolt (80) from one aperture (82) to another (82) provides said adjustment.

4. A frame clamp (52) for a bicycle carrier, the frame clamp and as claimed in any preceding claim wherein the opposing jaws (56, 58) and the over-centre latch (64) are made from aluminium.

5. A frame clamp (52) for a bicycle carrier, the frame clamp and as claimed in any preceding claim wherein the resilient inserts (60) are made from rubber.

6. A frame clamp (52) for a bicycle carrier, the frame clamp and as claimed in any preceding claim comprising a locating rod (54) for locating the frame clamp (52) in a bicycle carrier (20), the locating rod being connected to one of the opposing jaws (56, 58).

7. A bicycle carrier (20) comprising a frame clamp (52) comprising the features of the frame clamp as claimed in any preceding claim.

8. A vehicle (10) comprising a frame clamp (52) comprising the features of the frame clamp as claimed in any of claims 1 to 6 or a bicycle carrier (20) comprising the features of the bicycle carrier as claimed claim 7.

## Patentansprüche

1. Rahmenklemme (52) für einen Fahrradträger, wobei die Rahmenklemme Folgendes umfasst:
zwei einander gegenüberliegende Schenkel (56, 58), die einen Klemmabstand dazwischen definieren, wobei die zwei einander gegenüberliegenden Schenkel an einem Schwenkpunkt (62) schwenkbar verbunden sind und elastische Einsätze (60) umfassen, die angeordnet sind, um ein Objekt einzuklemmen; und
eine Übertotpunktverriegelung (64), die einen Griffabschnitt (68) und einen Nebenabschnitt (66) umfasst,
**dadurch gekennzeichnet, dass** der Griff- und der Nebenabschnitt jeweils schwenkbar miteinander verbunden sind und jeweils schwenkbar mit einem der einander gegenüberliegenden Schenkel verbunden sind, wobei die elastischen Einsätze eine Spannung für die Übertotpunktverriegelung bereitstellen,
wobei die schwenkbare Verbindung (80) zwischen dem Griffabschnitt oder dem Nebenabschnitt und dem entsprechenden gegenüberliegenden Schenkel (56, 58) eine einstellbare Verbindung ist und wobei ein Einstellen der einstellbaren Verbindung den Klemmabstand einstellt.

2. Rahmenklemme (52) für einen Fahrradträger, die Rahmenklemme und nach Anspruch 1, wobei die elastischen Einsätze (60) austauschbar sind.

3. Rahmenklemme (52) für einen Fahrradträger, die Rahmenklemme und nach Anspruch 1 oder 2, wobei die einstellbare Verbindung (80) Folgendes umfasst:
einen Gelenkbolzen (80), der sich von dem entsprechenden gegenüberliegenden Schenkel aus erstreckt; und
zwei oder mehr Öffnungen (82) im Griffabschnitt (58) oder Nebenabschnitt (56), wobei jede davon konfiguriert ist, den Gelenkbolzen (80) aufzunehmen;
wobei ein Bewegen des Gelenkbolzens (80) von einer Öffnung (82) zur anderen (82) das Einstellen bereitstellt.

4. Rahmenklemme (52) für einen Fahrradträger, die Rahmenklemme und nach einem der vorhergehenden Ansprüche, wobei die einander gegenüberliegenden Schenkel (56, 58) und die Übertotpunktverriegelung (64) aus Aluminium hergestellt sind.

5. Rahmenklemme (52) für einen Fahrradträger, die Rahmenklemme und nach einem der vorhergehenden Ansprüche, wobei die elastischen Einsätze (60) aus Kautschuk hergestellt sind.

6. Rahmenklemme (52) für einen Fahrradträger, die Rahmenklemme und nach einem der vorhergehenden Ansprüche, einen Positionierungsstab (54) zum Positionieren der Rahmenklemme (52) in einem Fahrradträger (20) umfassend, wobei der Positionierungsstab mit einem der einander gegenüberliegenden Schenkel (56, 58) verbunden ist.

7. Fahrradträger (20), der eine Rahmenklemme (52) umfasst, die die Merkmale der Rahmenklemme nach einem der vorhergehenden Ansprüche umfasst.

8. Fahrzeug (10), umfassend eine Rahmenklemme (52), die die Merkmale der Rahmenklemme nach einem der Ansprüche 1 bis 6 umfasst, oder einen Fahrradträger (20), der die Merkmale des Fahrradträgers nach Anspruch 7 umfasst.

## Revendications

1. Dispositif de serrage de cadre (52) pour un porte-bicyclette, le dispositif de serrage de cadre comprenant :
deux mâchoires opposées (56, 58) définissant une distance de serrage entre elles, les mâchoires opposées étant raccordées en pivotement en un point pivot (62) et comprenant des inserts résilients (60) agencés pour serrer un objet ; et
un verrou à arc-boutement (64) comprenant une partie poignée (68) et une partie esclave (66),
**caractérisé en ce que** la partie poignée et la partie esclave sont raccordées chacune en pivotement à l'autre et raccordées chacune en pivotement à l'une des mâchoires opposées, dans lequel les inserts résilients fournissent une tension au verrou à arc-boutement,
dans lequel le raccordement pivotant (80) entre la partie poignée ou la partie esclave et la mâchoire opposée (56, 58) correspondante est un raccordement réglable, et dans lequel un réglage dudit raccordement réglable règle la distance de serrage.

2. Dispositif de serrage de cadre (52) pour un porte-bicyclette, le dispositif de serrage de cadre et étant tel que revendiqué à la revendication 1, dans lequel les inserts résilients (60) sont remplaçables.

3. Dispositif de serrage de cadre (52) pour un porte-bicyclette, le dispositif de serrage de cadre et étant tel que revendiqué à la revendication 1 ou 2, dans lequel le raccordement réglable (80) comprend :
un boulon à oeil (80) partant de ladite mâchoire opposée correspondante ; et
deux ouvertures (82) ou plus dans la partie poignée (58) ou la partie esclave (56), chacune étant configurée pour recevoir le boulon à oeil (80) ;
dans lequel un mouvement du boulon à oeil (80) d'une ouverture (82) à une autre (82) assure ledit réglage.

4. Dispositif de serrage de cadre (52) pour un porte-bicyclette, le dispositif de serrage de cadre et étant tel que revendiqué à l'une quelconque des revendications précédentes, dans lequel les mâchoires opposées (56, 58) et le verrou à arc-boutement (64) sont réalisés en aluminium.

5. Dispositif de serrage de cadre (52) pour un porte-bicyclette, le dispositif de serrage de cadre et étant tel que revendiqué à l'une quelconque des revendications précédentes, dans lequel les inserts résilients (60) sont réalisés en caoutchouc.

6. Dispositif de serrage de cadre (52) pour un porte-bicyclette, le dispositif de serrage de cadre et étant tel que revendiqué à l'une quelconque des revendications précédentes, comprenant une tige de centrage (54) pour centrer le dispositif de serrage de cadre (52) dans un porte-bicyclette (20), la tige de centrage étant raccordée à l'une des mâchoires opposées (56, 58).

7. Porte-bicyclette (20) comprenant un dispositif de serrage de cadre (52) comprenant les particularités du dispositif de serrage de cadre tel que revendiqué à l'une quelconque des revendications précédentes.

8. Véhicule (10) comprenant un dispositif de serrage de cadre (52) comprenant les particularités du dispositif de serrage de cadre tel que revendiqué à l'une quelconque des revendications 1 à 6 ou un porte-bicyclette (20) comprenant les particularités du porte-bicyclette tel que revendiqué à la revendication 7.
